# EUROPÄISCHE PATENTSCHRIFT

(11) **EP 2 692 037 B1**
(45) Veröffentlichungstag und Bekanntmachung des Hinweises auf die Patenterteilung: **13.05.2015**
(21) Anmeldenummer: 12713034.2
(22) Anmeldetag: 27.03.2012
(51) Int. Cl.: H02J 3/14

(54) **STEUERVORRICHTUNG FÜR EINEN ELEKTRISCHEN VERBRAUCHER**
CONTROL APPARATUS FOR AN ELECTRICAL LOAD
DISPOSITIF DE COMMANDE POUR UN CONSOMMATEUR ÉLECTRIQUE

(30) Priorität: 31.03.2011 DE 102011006609
(43) Veröffentlichungstag der Anmeldung: 05.02.2014
(73) Patentinhaber: BSH Hausgeräte GmbH, 81739 München (DE)
(72) Erfinder: KESTEN-KÜHNE, Janis, 38678 Clausthal-Zellerfeld (DE); KOCH, Hans-Joachim, 91054 Erlangen (DE)
(86) Internationale Anmeldenummer: PCT/EP2012/055399
(87) Internationale Veröffentlichungsnummer: WO 2012/130836

(56) Entgegenhaltungen:
- WO-A2-2011/006828
- DE-A1-102007 032 052
- GB-A- 2 426 878

## Beschreibung

Die vorliegende Erfindung betrifft eine Steuervorrichtung zum Steuern der Leistung eines elektrischen Verbrauchers, insbesondere eines elektrischen Haushaltsgerätes oder einer Baugruppe eines elektrischen Haushaltsgerätes.

Haushaltskältegeräte verfügen herkömmlicherweise über eine eingebaute Steuervorrichtung, die die Leistung eines Kältemittelverdichters anhand der in einer Lagerkammer des Kältegerätes gemessenen Temperatur steuert. Die Steuervorrichtungen anderer Haushaltsgeräte, wie etwa von Spülmaschinen, Waschmaschinen oder dergleichen, stellen im Wesentlichen eine Benutzerschnittstelle dar, über die ein Benutzer eine Funktion der Maschine oder ein von der Maschine abzuarbeitendes Programm auswählen und in Gang setzen kann. Es wurde auch bereits vorgeschlagen, Haushaltsgeräte mit externen Steuervorrichtungen über ein digitales Netzwerk zusammenzuschalten, um so einem Benutzer die Möglichkeit zu geben, Geräte in seinem Haushalt aus der Ferne zu steuern.

Der zunehmende Beitrag von regenerativen, nicht ständig verfügbaren Quellen wie etwa Windkraft und Photovoltaik zur öffentlichen Stromversorgung führt zu erheblichen Problemen bei der Netzregelung. Da die Menge der aus diesen Quellen verfügbaren elektrischen Leistung nicht zuverlässig prognostizierbar ist, muss entweder aus anderen Quellen bezogene Leistung kurzfristig angepasst werden, damit die im Netz insgesamt verfügbare Leistung dem Bedarf der Verbraucher entspricht, oder es muss auf die Nachfrage seitens der Verbraucher kurzfristig eingewirkt werden, um sie an das Angebot anzupassen. Techniken hierfür werden unter dem Begriff "Smart Grid" gegenwärtig umfangreich diskutiert. Alle diese Techniken setzen die Existenz einer Steuerinstanz voraus, die in der Lage ist, sowohl mit den Erzeugern als auch den Verbrauchern von elektrischer Energie zu kommunizieren und die von ihnen abgegebene bzw. aufgenommene Leistung zu beeinflussen, um Angebot und Nachfrage nach elektrischer Leistung miteinander in Einklang zu bringen. Damit ein Smart Grid erfolgreich implementiert werden kann, muss demnach zunächst auf Seiten der Stromversorger eine Steuerinstanz bereitgestellt werden, die in der Lage ist, mit den Verbrauchern zu kommunizieren, um deren Leistungsaufnahme zu beeinflussen, vorher werden elektrische Geräte, die als intelligente Verbraucher in einem Smart Grid funktionieren können, am Markt nicht absetzbar sein. Doch auch wenn geeignete Steuerungsinstanzen zur Verfügung stehen, werden sich Smart Grid-fähige Geräte nur allmählich im Feld verbreiten, indem sie Altgeräte ersetzen, wobei zu erwartende Mehrkosten für die bei den neuen Geräten benötigten Kommunikationsschnittstellen noch ein Ausbreitungshindemis darstellen könnten.

Aus WO2011/006828 ist eine Steuervorrichtung für einen elektrischen Verbraucher bekannt, die die Frequenz einer Versorgungsspannung überwacht und die Leistung des Verbrauchers drosselt, wenn eine Abweichung der Frequenz von einem Sollwert auf eine zu hohe Belastung des Versorgungsnetzes hinweist. Frequenzabweichungen können nur auf der gesamten Ausdehnung des Versorgungsnetzes einheitlich auftreten. Daher kann der Fall auftreten, dass eine zu hohe Last, die in einer Region des Netzes zu einer Spannungsabnahme und infolge dessen zu erhöhten Leitungsverlusten führt, durch eine Leistungsdrosselung in einer anderen Region ausgeglichen wird, so dass die elektrische Energie unter Verlusten aus der Region mit gedrosseltem Verbrauch in die mit hohem Verbrauch befördert werden muss, die Leitungsverluste in der Region mit hohem Verbrauch aber unverändert hoch bleiben. Das Ausmaß, in dem eine Frequenzabweichung zu einer Drosselung des Verbrauchs im Netz führt, ist nicht davon abhängig, wie stark die Leistungsnachfrage das Angebot übersteigt, sondern von der Zahl der Verbraucher mit anhand der Netzfrequenz gesteuerter Leistung. Wenn deren Zahl hoch ist, kann eine Netzfrequenzabweichung zu einer so starken Drosselung des Verbrauchs führen, dass das Angebot die Nachfrage übersteigt und das Netz als Ganzes destabilisiert wird.

GB 2 426 878 A beschreibt eine Vorrichtung zum Steuern eines elektrischen Geräts an einem Stromnetz, die ebenfalls die Netzfrequenz überwacht, um anhand von deren Schwankungen die Belastung des Stromnetzes zu beurteilen und durch eine an diese Belastung angepasste Steuerung des Energieverbrauch des Geräts das Netz zu entlasten. Da die Belastung sich im Tageslauf ändert, wird vorgeschlagen, dass die Vorrichtung Änderungen der Belastung im Laufe des Betriebs erlernt und die Schwellen für Frequenzschwankungen, bei deren Überschreitung die Vorrichtung den Verbrauch des Geräts drosselt, entsprechend diesen Änderungen tageszeitlich variiert.

US 7 242 114 B1 beschreibt eine Vorrichtung zum Steuern eines elektrischen Geräts an einem Stromnetz, die die Spannung des Netzes überwacht und bei Unterschreitung eines Spannungsgrenzwerts angeschlossene Verbraucher abschaltet.

Ein vom Zustand des Versorgungsnetzes abhängiges Herauf- oder Herabsetzen der Leistung eines elektrischen Verbrauchers ist für dessen Benutzer natürclich nur so weit akzeptabel, als dies die erwartete Funktion des Verbrauchers wie etwa das Kühlen von in einem Kältegerät gelagerten Lebensmitteln nicht beeinträchtigt. Aufgabe der Erfindung ist daher, eine Steuervorrichtung zu schaffen, die die Auswirkungen einer Leistungsherabsetzung auf die Funktion eines davon betroffenen Verbrauchers zu minimiert.

Die Aufgabe wird gelöst durch eine Steuervorrichtung mit den Merkmalen des Anspruchs 1. Indem die Steuervorrichtung rechtzeitig bevor voraussichtlich die Bedingungen für eine Leistungsreduzierung auftreten werden, die Leistung des Verbrauchers heraufsetzt, ermöglicht sie dem Verbraucher, zum Beispiel auf Vorrat zu kühlen, oder ein ausgewähltes Programm früher als normalerweise geplant oder zeitweilig schneller ablaufen zu lassen, so dass zum Prognosezeitpunkt die Leistung des Verbrauchers tatsächlich reduziert werden kann, ohne dass dies dessen erwartete Funktion beeinträchtigt.

Die Vorgabe ist zweckmäßigerweise in Form einer Schwelle definiert, und das Verarbeitungsmittel ist eingerichtet, festzustellen, dass erste Voraussetzungen für eine Heraufsetzung der Leistung des Verbrauchers vorliegen, wenn die von dem Sensor gemessene Spannung über der Schwelle liegt und/oder dass erste Voraussetzungen für eine Herabsetzung der Leistung vorliegen, wenn die gemessene Spannung unter der Schwelle liegt. Ob eine Herauf- oder Herabsetzung der Leistung bei Vorliegen der ersten Voraussetzungen tatsächlich erfolgt, kann darüber hinaus von zweiten Bedingungen abhängig gemacht werden. Wenn das Verarbeitungsmittel das Vorliegen der ersten Voraussetzungen sowohl für eine Herauf- als auch für eine Herabsetzung beurteilt, dann kann die Schwelle für die Herabsetzung zweckmäßigerweise von der für die Heraufsetzung verschieden sein, um ein unnötiges Hin- und Herschalten zu vermeiden.

Eine Orientierung der Steuervorrichtung an der Netzspannung hat insbesondere den Vorteil, dass sie eine geographisch sehr feinräumige Steuerung der Leistung ermöglicht. Im Extremfall kann eine solche Steuervorrichtung zum Beispiel wenigstens einen von mehreren gemeinsam abgesicherten elektrischen Verbrauchern in einem Privathaushalt steuern. Wenn diese mehreren Verbraucher gemeinsam im Betrieb sind, ist der Spannungsabfall in ihrer gemeinsamen Versorgungsleitung höher, als wenn nur ein einzelner Verbraucher im Betrieb ist. Wenn die Steuervorrichtung dies durch einen Vergleich der elektrischen Versorgungsspannung mit einer geeignet vorgegebenen Schwelle erkennt, und daraufhin feststellt, dass die ersten Voraussetzungen für eine Herabsetzung der Leistung vorliegen, kann sie - ggf. unter Berücksichtigung der zweiten Bedingungen -die Entscheidung treffen, dass die Leistung tatsächlich herabgesetzt wird. Dadurch reduziert sich der Spannungsabfall auf der Versorgungsleitung, und es können nicht nur Nachfragespitzen auf diese Weise abgebaut werden, sondern auch Leitungsverluste werden vermindert. Umgekehrt kann die Steuervorrichtung durch Vergleich der - hierfür eventuell auf einen anderen Wert festgelegten - Schwelle feststellen, ob die benachbarten Verbraucher gerade ausgeschaltet sind, und bejahendenfalls feststellen, dass der Zeitpunkt günstig ist, um die Leistung des von ihr gesteuerten Verbrauchers heraufzusetzen.

Im einfachsten Fall ist das Beeinflussen der Leistung ein Ein- und/oder Ausschalten des Verbrauchers. Da ein Ein- und Ausschalten ein schwerwiegender Eingriff in die Funktion des Verbrauchers ist, besteht die Gefahr, dass die zweiten Bedingungen hierfür relativ selten gegeben sind, das heißt, obwohl es unter dem Gesichtspunkt von Leistungsangebot und -nachfrage zwar wünschenswert wäre, die Leistung des Verbrauchers in der einen oder anderen Richtung zu beeinflussen, findet die Beeinflussung letztlich nicht statt, weil sie die Funktion des Verbrauchers zu sehr stören würde. Wenn hingegen das Beeinflussen der Leistung auch ein Umschalten zwischen nicht verschwindenden Leistungsstufen des Verbrauchers umfasst, werden auch die zweiten Bedingungen in der Praxis öfter erfüllt sein, so dass die Leistung des Verbrauchers tatsächlich geändert wird, wenn dies wünschenswert ist.

Um die zweiten Bedingungen zu beurteilen, kann die Steuervorrichtung zweckmäßigerweise wenigstens einen zweiten Sensor zum Erfassen eines internen Parameters des Verbrauchers umfassen. Wenn der Verbraucher ein Verdichter eines Kältegerätes ist, dann ist der interne Parameter zweckmäßigerweise die Temperatur einer Lagerkammer des Kältegerätes.

Wenn der Verbraucher eingerichtet ist, eine vorgegebene Aufgabe wie etwa ein Spül- oder Waschprogramm bis zum Ablauf einer vorgegebenen Zeitspanne auszuführen, dann kann die Beeinflussung der Leistung auch darin liegen, dass der Verbraucher von der Steuervorrichtung rechtzeitig eingeschaltet wird, um die Aufgabe vor Ablauf der vorgegebenen Zeitspanne abzuarbeiten.

Die erfindungsgemäße Steuervorrichtung kann, insbesondere, wenn sie ausgelegt ist, um interne Parameter des gesteuerten Verbrauchers bei einer Entscheidung über eine Beeinflussung der Leistung zu berücksichtigen, mit dem gesteuerten Verbraucher in einer Baueinheit integriert sein.

Denkbar ist aber auch, dass die Verarbeitungsmittel der Steuervorrichtung wenigstens teilweise in einer von dem Verbraucher getrennten Baueinheit untergebracht sind, insbesondere dann, wenn diese Verarbeitungsmittel eingerichtet sind, um mehrere Verbraucher, eventuell unterschiedlichen Typs, zu steuern.

Bevorzugt ist die Steuervorrichtung in einem Haushaltsgerät, insbesondere einem Haushaltskältegerät zu dessen bedarfsgemäßen Steuerung integriert.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: ein Schema eines elektrischen Versorgungsnetzes, in dem die vorliegende Erfindung anwendbar ist;
- Fig. 2: ein Flussdiagramm eines von einer erfindungsgemäßen Steuervorrichtung ausgeführten Steuerverfahrens gemäß einer ersten Ausgestaltung der Erfindung;
- Fig. 3: ein Flussdiagramm gemäß einer zweiten Ausgestaltung der Erfindung; und
- Fig. 4: den zeitlichen Zusammenhang zwischen der Abarbeitung eines Arbeitsprogramms durch ein elektrisches Haushaltsgerät und dem Leistungsangebot im Versorgungsnetz gemäß einer dritten Ausgestaltung der Erfindung.

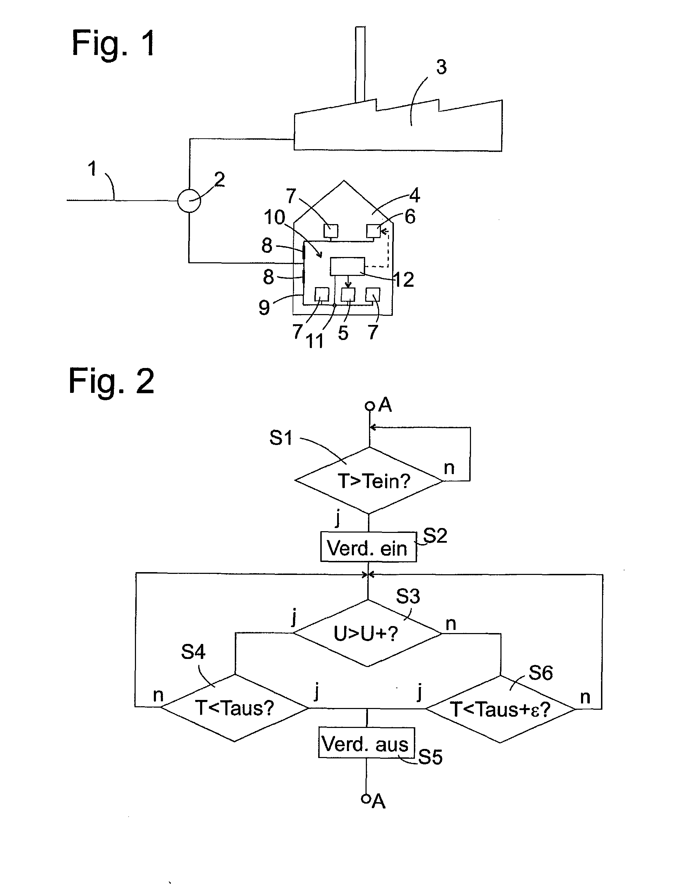

Ein in Fig. 1 gezeigtes elektrisches Versorgungsnetz, in dem die vorliegende Erfindung anwendbar ist, umfasst nicht dargestellte Erzeuger von elektrischer Energie unterschiedlicher, an sich beliebiger Typen, die über eine Hochspannungsleitung 1, zum Beispiel eines überregionalen Verbundnetzes, und Transformatorstationen 2 gewerbliche und private Anwender 3 bzw. 4 mit elektrischer Energie versorgen. Die Anwendung der Erfindung wird im Folgenden lediglich im Bezug auf den privaten Anwender 4 diskutiert, doch dürfte die Übertragung auf den gewerblichen Anwender 3 dem Fachmann anhand der folgenden Beschreibung keine Schwierigkeiten bereiten.

Der private Anwender 4 benutzt eine Mehrzahl von elektrischen Verbrauchern 5, 6, 7, insbesondere von elektrischen Haushaltsgeräten wie etwa Kühl- oder Gefriergeräten, eine Spülmaschine, eine Waschmaschine, ein Wäschetrockner oder dergleichen. Jeweils mehrere dieser Verbraucher sind über eine gemeinsame Sicherung 8 abgesichert, so dass auf einem Abschnitt 9 der Versorgungsleitung, der die betreffenden Verbraucher mit ihrer Sicherung 8 verbindet, Spannungsschwankungen in Abhängigkeit von der von den über diesen Abschnitt 9 versorgten Verbrauchern aufgenommenen Leistung auftreten können. Eine Steuervorrichtung 10 umfasst einen Spannungs- und Frequenzsensor 11, der an dem Leitungsabschnitt 9 angeordnet ist, um die dort anliegende Netzspannung und -frequenz zu erfassen, und einen mit dem Sensor verbundenen Signalprozessor 12. Der Sensor 11 kann galvanisch oder induktiv an den Leitungsabschnitt 9 gekoppelt sein.

Einer ersten Ausgestaltung der Erfindung zu Folge steuert die Steuervorrichtung 10 einen einzigen Verbraucher 5, dem sie fest zugeordnet ist, zum Beispiel durch Einbau in dessen Gehäuse.

Einer zweiten Ausgestaltung zu Folge kann die Steuervorrichtung 10 ausgelegt sein, um mehrere Verbraucher 5, 6 zu steuern; in diesem Fall wird die Steuervorrichtung 10 im Allgemeinen als eine autonome Baueinheit realisiert sein, die mit den gesteuerten Verbrauchern 5, 6 über ein an sich bekanntes Signalisierungsprotokoll wie etwa dBus-II kommuniziert, um deren Leistungsaufnahme zu beeinflussen. In der Darstellung der Fig. 1 ist der Verbraucher 6 über eine andere Sicherung 8 abgesichert als der Verbraucher 5, so dass die Netzspannung, die den Verbraucher 6 erreicht, von der vom Sensor 11 erfassten geringfügig abweichen kann und dass, wenn der Verbraucher 6 auf eine Nachricht der Steuervorrichtung 10 hin seine Leistungsaufnahme reduziert, dies auf den Spannungsabfall in dem den Verbraucher 5 versorgenden Leitungsabschnitt 9 keinen Einfluss hat. Wenn die Ursache für eine vom Sensor 11 gemessene zu niedrige Netzspannung vom privaten Anwender 4 örtlich entfernt ist, z.B. eine Nachfragespitze beim gewerblichen Anwender 3, dann ist auch eine Verringerung der Leistungsaufnahme beim Verbraucher 6 hilfreich, um die Netzspannung zu stabilisieren.

Eine elementare Variante eines von der Steuervorrichtung 10 gemäß der ersten Ausgestaltung ausgeführten Arbeitsverfahrens wird anhand der Fig. 2 erläutert. Als gesteuerter Verbraucher 5 wird hier der Verdichter eines Haushaltskältegeräts von allgemein bekannter Bauart angenommen, in das die Steuervorrichtung 10 eingebaut ist. Es wird angenommen, dass am Startpunkt A des Verfahrens der Verdichter ausgeschaltet ist. Die Steuervorrichtung 10 ist mit einem nicht dargestellten Temperaturfühler verbunden, um die Temperatur T einer Lagerkammer des Kältegeräts zu überwachen. In Schritt S1 überprüft die Steuervorrichtung 10 in an sich bekannter Weise, ob diese Temperatur T über einer vom Benutzer einstellbaren Einschalttemperatur Tein liegt. Solange dies nicht der Fall ist, wird der Schritt regelmäßig wiederholt, wenn die Einschalttemperatur Tein überschritten wird, wird der Verdichter in Schritt S2 eingeschaltet. Es folgt in Schritt S3 eine Überprüfung, ob die Netzspannung U auf der Leitung 9 über einer Schwelle U+ liegt. Wenn dies der Fall ist, dann ist das Angebot an elektrischer Leistung ausreichend, bzw. von den Verbrauchern 7, die sich mit dem Verbraucher 5 den Leitungsabschnitt 9 teilen, sind nicht so viele im Betrieb, dass sie einen deutlichen Spannungsabfall auf der Leitung 9 verursachen. In diesem Fall vergleicht die Steuervorrichtung 10 im folgenden Schritt S4 die Temperatur T mit einer "normalen" Ausschalttemperatur Taus. Solange diese nicht unterschritten ist, kehrt das Verfahren zu Schritt S3 zurück, anderenfalls wird der Verdichter in Schritt S5 wieder ausgeschaltet, und das Verfahren kehrt an den Ausgang zurück.

Wenn hingegen der Vergleich des Schritts S3 eine Versorgungsspannung unter der Schwelle U+ ergibt, dann wird die Temperatur T in Schritt S6 mit einer erhöhten Ausschalttemperatur Taus+ε verglichen, die zwischen Taus und Tein liegt. Infolgedessen wird bei knappem Leistungsangebot der Verdichter früher wieder ausgeschaltet, als wenn das Leistungsangebot ausreichend ist, so dass die Belastung des Netzes insgesamt abnimmt und für die übrigen Verbraucher 7 das Leistungsangebot besser wird.

Wenn das Versorgungsnetz in einer gegebenen geographischen Region stark belastet ist und infolgedessen die Netzspannung in dieser Region sinkt, so kann dies bei einer großen Zahl von gesteuerten Verbrauchern 5, 6 in dieser Region berücksichtigt werden, und indem wenigstens ein Teil dieser Verbraucher seine Leistungsaufnahme tatsächlich drosselt, kann die Überlastung beseitigt und die Netzspannung wieder stabilisiert werden. Es besteht daher nur noch geringer Bedarf, im Rahmen eines weiträumigen Verbundnetzes elektrische Leistung aus entfernten Regionen unter Verlusten in die überlastete Region zu transportieren. Reicht die auf diese Weise realisierbare Nachfragedrosselung nicht aus, so kann es zu einer Verschiebung der Netzfrequenz kommen, die sich im Versorgungsnetz wesentlich weiträumiger bemerkbar macht als der Spannungsabfall. Wenn die Steuervorrichtung nicht nur auf eine Schwankung der Netzspannung, sondern auch auf eine Schwankung der Netzfrequenz anspricht, dann können auch weit entfernte Steuervorrichtungen die Schwankung registrieren und darauf reagieren.

Um dieser Tatsache Rechnung zu tragen, kann bei einer Variante des Verfahrens der Schritt S3 ersetzt werden durch eine Überprüfung, ob die Netzfrequenz innerhalb eines vorgegebenen Intervalls um ihren Sollwert von 50 Hz liegt oder nicht, oder es können sowohl die Netzspannung als auch die Netzfrequenz überprüft werden und der Schritt S6 ausgeführt werden, wenn wenigstens eines der beiden Kriterien auf ein unzureichendes Leistungsangebot hinweist.

Als nächstes wird der Fall einer Steuervorrichtung 10 betrachtet, die ausgelegt ist, um mehrere Verbraucher 5, 6 unterschiedlichen, möglichst beliebigen Typs zu steuern. Als Verbraucher 5 wird hier weiterhin ein Haushaltskältegerät angenommen, der Verbraucher 6 kann zum Beispiel ein PC sein, dessen Leistungsaufnahme durch Variieren seiner Taktfrequenz veränderbar ist. Die Bedingungen, unter denen die Leistungsaufnahme des Haushaltskältegeräts ohne Einbuße an Funktionalität reduziert werden kann, sind natürlich andere als die, unter denen dies bei einem PC möglich ist. Da die Steuervorrichtung 10 in Funktion und Aufbau möglichst unabhängig von den Typen und der Anzahl der von ihr gesteuerten Verbraucher 5, 6 sein sollte, kann sie deren Besonderheiten nicht berücksichtigen und folglich auch keine Befehle erzeugen, auf die ein gesteuerter Verbraucher 5 oder 6 zweckmäßigerweise durch eine bedingungslose Änderung der Leistungsaufnahme reagieren könnte. Die Steuervorrichtung 10 kann lediglich durch Überwachung von Netzspannung und/oder Netzfrequenz feststellen, ob die notwendigen Bedingungen vorliegen, die ein Ein- oder Ausschalten eines Verbrauchers oder ein Umschalten zwischen verschiedenen Leistungsniveaus des Verbrauchers sinnvoll machen, bei Vorliegen dieser Bedingungen muss die Entscheidung, ob tatsächlich ein- oder ausgeschaltet wird bzw. die Leistung geändert wird, bei einer mittels der Steuervorrichtung 10 zusammenwirkenden internen Steuervorrichtung des Verbrauchers 5 bzw. 6 verbleiben. Bezogen auf das Verfahren der Fig. 2 bedeutet dies beispielsweise, dass eine Thermostatsteuervorrichtung des Kältegeräts die Schritte S1, S2, S5 ausführt, bei der Entscheidung, ob Schritt S4 oder S6 auszuführen ist, jedoch auf ein von der externen Steuervorrichtung 10 signalisiertes Ergebnis des Vergleichs S3 zurückgreift.

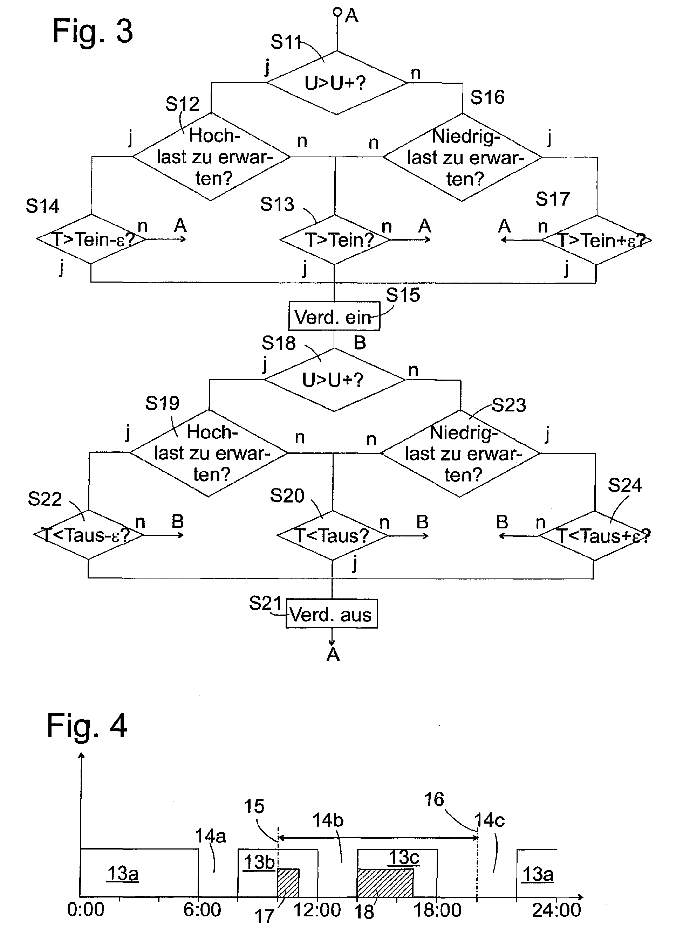

Fig. 3 zeigt ein Flussdiagramm für die Steuerung eines Kältegerätes, das in analoger Weise wie oben beschrieben vollständig von einer eingebauten Steuervorrichtung 10 des Kältegeräts 5 oder arbeitsteilig von einer externen Steuervorrichtung 10 und einer Thermostatsteuervorrichtung des Kältegerätes 5 ausgeführt werden kann. Die Besonderheit des Verfahrens der Fig. 3 liegt darin, dass die Steuervorrichtung 10 hier ausgelegt ist, um das Leistungsangebot im Netz im Tagesverlauf zu überwachen und Zeiten mit ausreichenden bzw. knappen Leistungsangeboten, die regelmäßig wiederkehren, selbsttätig zu identifizieren und eine Aufzeichnung darüber anzulegen.

Wiederum wird angenommen, dass am Anfangspunkt A des Verfahrens der Verdichter des Kältegeräts 5 ausgeschaltet ist. In Schritt S11 wird, wie bereits mit Bezug auf Fig. 2 erläutert, anhand der vom Sensor 11 erfassten Netzspannung und/oder der Netzfrequenz beurteilt, ob das gegenwärtige Leistungsangebot im Versorgungsnetz ausreichend ist oder nicht. Wenn es ausreichend ist, wird in Schritt S12 anhand der zuvor angelegten Aufzeichnung geprüft, ob in der näheren Zukunft, das heißt in einer Zeitspanne, in der der Verdichter voraussichtlich noch in Betrieb wäre, wenn er zum gegenwärtigen Zeitpunkt eingeschaltet wird, ein unzureichendes Leistungsangebot zu erwarten ist. Wenn dies nicht der Fall ist, wird die Temperatur T des Kältegerätes mit der normalen Einschalttemperatur Tein in Schritt S13 verglichen, und solange diese normale Einschalttemperatur nicht überschritten ist, kehrt das Verfahren zum Ausgang A zurück. Wenn hingegen die Überprüfung des Schritts S12 ergibt, dass während der voraussichtlichen Laufzeit des Verdichters das Leistungsangebot knapp wird, findet im Schritt S14 ein Vergleich der Temperatur T mit einer herabgesetzten Einschalttemperatur Tein-ε statt. Infolgedessen wird der Verdichter bereits bei einer relativ niedrigen Temperatur T des Kältegeräts eingeschaltet (S15), bei der dies bei kontinuierlich ausreichendem Leistungsangebot nicht geschähe. Infolgedessen ist das Kältegerät dann, wenn die Leistungsknappheit tatsächlich eintritt, bereits vorgekühlt, und der Verdichter kann lange Zeit ausgeschaltet bleiben, ohne dass dies zu einer unerwünschten Erwärmung des Kühlguts führen kann. D.h. das Kältegerät verbraucht in einer Zeit ausreichenden Angebots elektrische Energie auf Vorrat, um in einer Zeit knappen Angebots seinen Verbrauch einschränken zu können.

Wenn umgekehrt in Schritt S11 festgestellt wird, dass gegenwärtig das Leistungsangebot knapp ist, wird im Schritt S16 geprüft, ob ein Zeitraum mit ausreichendem Leistungsangebot bevorsteht. Ist dies nicht der Fall, dann muss trotz knappem Angebot normal gekühlt werden, und das Verfahren geht über zu Schritt S13. Wenn jedoch ein Zeitraum mit ausreichendem Leistungsangebot bevorsteht, dann ist es sinnvoll, das Einschalten des Verdichters hinauszuzögern. Dies geschieht durch Verzweigen nach S17, wo die Temperatur T mit einer erhöhten Einschalttemperatur Tein+ε verglichen wird und der Verdichter erst dann eingeschaltet wird (S15), wenn diese erhöhte Einschalttemperatur überschritten ist.

Wenn der Verdichter eingeschaltet ist, können sich, abweichend von der Darstellung der Fig. 3, die Schritte S3 bis S6 der Fig. 2 identisch anschließen.

In dem Flussdiagramm der Fig. 3 hingegen folgt, wenn der mit B bezeichnete Betriebszustand mit eingeschaltetem Verdichter erreicht ist, zunächst wieder eine Überprüfung S18, ob das gegenwärtige Leistungsangebot ausreichend ist, und wenn ja, eine Überprüfung S19, ob eine Leistungsknappheit demnächst zu erwarten ist. Ist dies nicht der Fall, dann wird der Verdichter über die Schritte S20, S21 wieder ausgeschaltet, sobald die normale Ausschalttemperatur Taus unterschritten ist. Wenn hingegen eine Leistungsknappheit zu erwarten ist, wird in Schritt S22 ein Vergleich mit einer herabgesetzten Ausschalttemperatur Tein-ε vorgenommen, und erst bei deren Unterschreitung wird der Verdichter wieder ausgeschaltet. Auch hierdurch wird das Kältegerät in Vorbereitung auf die bevorstehende Leistungsknappheit vorgekühlt, um bei Eintritt der Knappheit den Verdichter lange Zeit ausgeschaltet lassen zu können. Tritt diese Leistungsknappheit während des Betriebs des Verdichters schließlich ein, dann findet eine Verzweigung von S18 nach S23 statt. Hier wird geprüft, ob ein Zeitraum besserem Leistungsangebot demnächst wieder zu erwarten ist. Wenn nicht, folgt normaler Kühlbetrieb mit den Schritten S20, S21. Falls mit verbessertem Angebot zu rechnen ist, wird in Schritt S24 mit einer heraufgesetzten Ausschalttemperatur Taus+ε verglichen. Wenn diese unterschritten wird, noch bevor sich das Leistungsangebot gebessert hat, wird der Verdichter ausgeschaltet, früher als im Normalbetrieb, so dass er, wenn später ausreichend Leistung wieder zur Verfügung steht, die Einschalttemperatur Tein schneller wieder erreicht wird und somit die Phase ausreichenden Angebots gut genutzt werden kann.

Fig. 4 zeigt ein Muster von Phasen ausreichenden und knappen Leistungsangebots auf der Versorgungsleitung 9 des privaten Anwenders 4, wie es typischerweise in der Aufzeichnung der Steuervorrichtung 10 dargestellt sein könnte. Phasen 13a, 13b, 13c ausreichenden Angebotes im Laufe der Nacht, vormittags und nachmittags werden unterbrochen von Phasen 14a, 14b, 14c hoher Stromnachfrage am Morgen, zur Mittagszeit und am Abend. Eine Steuervorrichtung 10 zum Steuern von Verbrauchern unterschiedlichen Typs registriert im Tagesverlauf fortlaufend das Leistungsangebot und ist dadurch nach wenigen Tagen des Betriebs mit zunehmender Genauigkeit in der Lage, die Zeiten ausreichenden oder knappen Leistungsangebots vorherzusagen. Eine solche Steuervorrichtung 10 versorgt die von ihr gesteuerten Verbraucher 5, 6 in regelmäßigen Zeitabständen mit einer Information, die angibt, ob das gegenwärtige Leistungsangebot ausreichend ist oder nicht, und mit einer Angabe über die noch verbleibende Zeit bis zur nächsten Änderung dieses Zustands. Eine von dieser Steuervorrichtung 10 gesteuerte Waschmaschine wird zum Beispiel zu einem Zeitpunkt 15 im Laufe des Vormittags von einem Benutzer in Betrieb genommen, um bis zu einem vom Benutzer programmierten Zeitpunkt 16 am Abend ein Waschprogramm abzuarbeiten, das einen Vor- und einen Hauptwaschgang umfasst. Zum Zeitpunkt 15 ist das Leistungsangebot ausreichend, und die von der Steuervorrichtung 10 signalisierte Information zeigt der Waschmaschine, dass dies während der voraussichtlichen Dauer des Vorwaschgangs 17 so bleiben wird. Die Maschine startet daher sofort mit dem Vorwaschgang 17. Die am Ende des Vorwaschgangs 17 - im Laufe der Phase 13b - von der Steuervorrichtung 10 kommende Information zeigt der Waschmaschine, dass zwar das Leistungsangebot ausreichend ist, dass aber die Zeit bis zum Beginn der nächsten Knappheitsphase 14b nicht ausreicht, um den Hauptwaschgang 18 bei durchgehend ausreichendem Leistungsangebot durchzuführen. Infolgedessen verzögert die Waschmaschine den Start des Hauptwaschgangs 18. Sie startet den Hauptwaschgang 18 entweder, wenn -wie in Fig. 4 dargestellt - die nächste Phase 13c ausreichenden Leistungsangebots beginnt, oder wenn dies unabhängig vom Leistungsangebot spätestens nötig ist, um den Hauptwaschgang 18 rechtzeitig zum Zeitpunkt 15 abzuschließen. So wird bis zur vom Benutzer gewünschten Zeit 16 das Waschprogramm unter weitgehender bis vollständiger Meidung von Phasen 14 knappen Leistungsangebots vollständig abgearbeitet.

Die oben für die Waschmaschine beschriebene Arbeitsweise ist auf beliebige elektrische Hausgeräte übertragbar, die programmiert werden können, um eine bestimmte Aufgabe bis zu einem von einem Benutzer bestimmten Zeitpunkt zu erledigen, wie etwa Wäschetrockner, Spülmaschine, Brotbackautomat und andere.

## Patentansprüche

1. Steuervorrichtung zum Steuern der Leistung eines elektrischen Verbrauchers (5, 6), insbesondere eines elektrischen Haushaltsgeräts oder einer Baugruppe eines elektrischen Haushaltsgeräts, mit wenigstens einem Sensor (11) und einem Verarbeitungsmittel (12) zum Vergleichen eines von dem Sensor (11) erfassten Parameters mit einer Vorgabe und zum Beeinflussen der Leistung des Verbrauchers anhand des Ergebnisses des Vergleichs, wobei der wenigstens eine Sensor (11) ein Spannungssensor zum Erfassen einer Netzspannung ist, **dadurch gekennzeichnet, dass** das Verarbeitungsmittel (12) eingerichtet ist, wiederkehrende Muster (13, 14) im zeitlichen Ablauf der Netzspannung zu erkennen, anhand eines erkannten Musters (13, 14) ein zukünftiges Vergleichsergebnis zu prognostizieren und, wenn das prognostizierte Vergleichsergebnis besagt, dass erste Voraussetzungen für eine Herabsetzung der Leistung vorliegen werden (S12), zu einem gegenwärtigen Zeitpunkt festzustellen (S14), dass erste Voraussetzungen für eine Heraufsetzung der Leistung (S15) vorliegen.

2. Steuervorrichtung nach Anspruch 1, **dadurch gekennzeichnet, dass** die Vorgabe eine Schwelle ist, und dass das Verarbeitungsmittel (12) eingerichtet ist, festzustellen, dass die ersten Voraussetzungen (S3) für eine Heraufsetzung (S2, S15) der Leistung des Verbrauchers (5, 6) vorliegen, wenn die von dem Sensor (11) erfasste Netzspannung über der Schwelle liegt und/oder dass die ersten Voraussetzungen für eine Herabsetzung der Leistung vorliegen, wenn die erfasste Netzspannung unter der Schwelle (U+) liegt.

3. Steuervorrichtung nach einem der Ansprüche 1 oder 2, **dadurch gekennzeichnet, dass** die Vorgabe ein Intervall ist, und dass das Verarbeitungsmittel eingerichtet ist, festzustellen, dass die ersten Voraussetzungen für eine Heraufsetzung der Leistung des Verbrauchers (5, 6) vorliegen, wenn die von dem Sensor (11) erfasste Netzspannung in dem Intervall liegt und/oder für eine Herabsetzung der Leistung vorliegen, wenn die erfasste Netzspannung außerhalb des Intervalls liegt.

4. Steuervorrichtung nach einem der vorhergehenden Ansprüche, **dadurch gekennzeichnet, dass** das Beeinflussen der Leistung ein Ein- und/oder Ausschalten (S2, S5, S15, S21) des Verbrauchers umfasst.

5. Steuervorrichtung nach einem der vorhergehenden Ansprüche, **dadurch gekennzeichnet, dass** das Beeinflussen der Leistung ein Umschalten zwischen nichtverschwindenden Leistungsstufen des Verbrauchers umfasst.

6. Steuervorrichtung nach einem der vorhergehenden Ansprüche, **dadurch gekennzeichnet, dass** sie wenigstens einen zweiten Sensor zum Erfassen eines internen Parameters (T) des Verbrauchers umfasst und das Verarbeitungsmittel (12) ferner eingerichtet ist, die Beeinflussung der Leistung unter Berücksichtigung des internen Parameters (T) vorzunehmen.

7. Steuervorrichtung nach Anspruch 6, **dadurch gekennzeichnet, dass** der Verbraucher ein Verdichter eines Kältegeräts (5) und der interne Parameter die Temperatur (T) einer Lagerkammer des Kältegeräts (5) ist.

8. Steuervorrichtung nach einem der Ansprüche 1 bis 6, **dadurch gekennzeichnet, dass** der Verbraucher eingerichtet ist, eine vorgegebene Aufgabe bis zum Ablauf (16) einer vorgegebenen Zeitspanne auszuführen und die Beeinflussung der Leistung ein Einschalten des Verbrauchers rechtzeitig vor Ablauf (16) der Zeitspanne ist.

9. Steuervorrichtung nach Anspruch 8, **dadurch gekennzeichnet, dass** der Verbraucher eine Spülmaschine, eine Waschmaschine, ein Wäschetrockner oder ein Backautomat ist.

10. Steuervorrichtung nach einem der vorhergehenden Ansprüche, **dadurch gekennzeichnet, dass** sie mit dem gesteuerten Verbraucher (5) in einer Baueinheit integriert ist.

11. Steuervorrichtung nach einem der Ansprüche 1 bis 9, **dadurch gekennzeichnet, dass** die Verarbeitungsmittel (12) wenigstens teilweise in einer von dem Verbraucher (5) getrennten Baueinheit untergebracht sind.

12. Haushaltsgerät, insbesondere Haushaltskältegerät, **gekennzeichnet durch** eine Steuervorrichtung nach einem der Ansprüche 1 bis 11.

## Claims

1. Control apparatus for controlling the power of an electrical consumer (5, 6), in particular an electrical domestic appliance or an assembly of an electrical domestic appliance, having at least one sensor (11) and a processing means (12) for comparing a parameter detected by the sensor (11) with a predetermined value and for influencing the power of the consumer based on the result of this comparison, wherein the at least one sensor (11) is a voltage sensor for detecting a network voltage, **characterised in that** the processing means (12) is set up to identify recurring patterns (13, 14) in the time sequence of the network voltage, to forecast a future comparison result based on an identified pattern (13, 14) and, if the forecast comparison result indicates that first conditions for lowering the power are present (S12), to ascertain at a current time point (S 14) that first conditions for increasing the power (S 15) are present.

2. Control apparatus according to claim 1, **characterised in that** the predetermined value is a threshold and the processing means (12) is set up to ascertain that the first conditions (S3) for increasing (S2, S 15) the power of the consumer (5, 6) are present if the network voltage detected by the sensor (11) is above the threshold and/or that the first conditions for lowering the power are present if the detected network voltage is below the threshold (U+).

3. Control apparatus according to either claim 1 or claim 2, **characterised in that** the predetermined value is an interval and the processing means is set up to ascertain that the first conditions for increasing the power of the consumer (5, 6) are present if the network voltage detected by the sensor (11) lies within the interval and/or the first conditions for lowering the power are present if the detected network voltage lies outside the interval.

4. Control apparatus according to one of the preceding claims, **characterised in that** influencing the power comprises switching (S2, S5, S15, S21) the consumer on and/or off.

5. Control apparatus according to one of the preceding claims, **characterised in that** influencing the power comprises switching between non-vanishing power stages of the consumer.

6. Control apparatus according to one of the preceding claims, **characterised in that** it comprises at least one second sensor for detecting an internal parameter (T) of the consumer and the processing means (12) is also set up to influence the power taking into account the internal parameter (T).

7. Control apparatus according to claim 6, **characterised in that** the consumer is a compressor of a refrigeration appliance (5) and the internal parameter is the temperature (T) of a storage chamber of the refrigeration appliance (5).

8. Control apparatus according to one of claims 1 to 6, **characterised in that** the consumer is set up to perform a predetermined task by the end (16) of a predetermined time period and influencing the power comprises switching the consumer on promptly before the end (16) of the time period.

9. Control apparatus according to claim 8, **characterised in that** the consumer is a dishwasher, washing machine, tumble dryer or breadmaker.

10. Control apparatus according to one of the preceding claims, **characterised in that** it is integrated in a structural unit with the controlled consumer (5).

11. Control apparatus according to one of claims 1 to 9, **characterised in that** the processing means (12) are accommodated at least partially in a structural unit that is separate from the consumer (5).

12. Domestic appliance, in particular a domestic refrigeration appliance, **characterised by** a control apparatus according to one of claims 1 to 11.

## Revendications

1. Dispositif de commande permettant de commander la puissance d'un consommateur électrique (5, 6), en particulier d'un appareil ménager électrique ou d'un module d'un appareil ménager électrique, comprenant au moins un capteur (11) et un moyen de traitement (12) pour comparer un paramètre détecté par le capteur (11) avec une consigne et pour influencer la puissance du consommateur sur la base du résultat de la comparaison, ledit au moins un capteur (11) étant un capteur de tension destiné à détecter une tension de réseau, **caractérisé en ce que** le moyen de traitement (12) est conçu pour reconnaître des modèles (13, 14) récurrents dans l'évolution dans le temps de la tension de réseau, pour pronostiquer un futur résultat de comparaison sur la base d'un modèle (13, 14) reconnu et, si le résultat de comparaison pronostiqué prévoit que les premières conditions d'une diminution de la puissance seront réunies (S12), pour établir à un moment présent (S14) que les premières conditions d'une augmentation de la puissance (S15) sont réunies.

2. Dispositif de commande selon la revendication 1, **caractérisé en ce que** la consigne est un seuil, et **en ce que** le moyen de traitement (12) est conçu pour établir que les premières conditions (S3) d'une augmentation (S2, S15) de la puissance du consommateur (5, 6) sont réunies si la tension de réseau détectée par le capteur (11) est supérieure au seuil et/ou que les premières conditions d'une diminution de la puissance sont réunies si la tension de réseau détectée est inférieure au seuil (U+).

3. Dispositif de commande selon l'une des revendications 1 ou 2, **caractérisé en ce que** la consigne est un intervalle, et **en ce que** le moyen de traitement est conçu pour établir que les premières conditions d'une augmentation de la puissance du consommateur (5, 6) sont réunies si la tension de réseau détectée par le capteur (11) se situe dans l'intervalle et/ou que les premières conditions d'une diminution de la puissance sont réunies si la tension de réseau détectée se situe en dehors de l'intervalle.

4. Dispositif de commande selon l'une des revendications précédentes, **caractérisé en ce que** l'influence de la puissance comprend une mise en marche et/ou un arrêt (S2, S5, S15, S21) du consommateur.

5. Dispositif de commande selon l'une des revendications précédentes, **caractérisé en ce que** l'influence de la puissance comprend une commutation entre des niveaux de puissance non nuls du consommateur.

6. Dispositif de commande selon l'une des revendications précédentes, **caractérisé en ce qu'**il comprend au moins un deuxième capteur pour détecter un paramètre interne (T) du consommateur, et le moyen de traitement (12) est en outre conçu pour influencer la puissance en tenant compte du paramètre interne (T).

7. Dispositif de commande selon la revendication 6, **caractérisé en ce que** le consommateur est un compresseur d'un appareil frigorifique (5) et le paramètre interne est la température (T) d'un compartiment de stockage de l'appareil frigorifique (5).

8. Dispositif de commande selon l'une des revendications 1 à 6, **caractérisé en ce que** le consommateur est conçu pour exécuter une tâche prédéterminée jusqu'à l'expiration (16) d'un laps de temps prédéterminé, et l'influence de la puissance est une mise en marche du consommateur suffisamment tôt avant l'expiration (16) du laps de temps.

9. Dispositif de commande selon la revendication 8, **caractérisé en ce que** le consommateur est un lave-vaisselle, un lave-linge, un sèche-linge ou un four automatique.

10. Dispositif de commande selon l'une des revendications précédentes, **caractérisé en ce qu'**il est intégré, avec le consommateur (5) commandé, dans un ensemble.

11. Dispositif de commande selon l'une des revendications 1 à 9, **caractérisé en ce que** les moyens de traitement (12) sont logés au moins partiellement dans un ensemble séparé du consommateur (5).

12. Appareil ménager, en particulier appareil frigorifique ménager, **caractérisé par** un dispositif de commande selon l'une des revendications 1 à 11.
